# EUROPEAN PATENT SPECIFICATION

(11) **EP 3 227 252 B1**
(45) Date of publication and mention of the grant of the patent: **18.09.2019**
(21) Application number: 15865906.0
(22) Date of filing: 27.11.2015
(51) Int. Cl.: C12H 6/02

(54) **INTEGRATED ETHANOL SEPARATION AND VINASSE/ SLOP CONCENTRATION USING MECHANICAL VAPOUR RECOMPRESSION**
INTEGRIERTE ETHANOLTRENNUNG UND VINASSE-/SCHLEMPENKONZENTRATION MITTELS MECHANISCHER DAMPFREKOMRESSION
SÉPARATION D'ÉTHANOL ET CONCENTRATION DE VINASSE/DRÊCHE INTÉGRÉES AU MOYEN D'UNE RECOMPRESSION DE VAPEUR MÉCANIQUE

(30) Priority: 04.12.2014 IN 3888MU2014
(43) Date of publication of application: 11.10.2017
(73) Proprietor: Praj Industries Limited, Pune, Hinjewadi 411057 (IN)
(72) Inventor: GHANSHAM BABURAO DESHPANDE, Pune-411057 (IN); PRASANNA SHAM PAI, Pune-411057 (IN); DEVDATTA KRISHNA DESHPANDE, Pune-411057 (IN)
(74) Representative: Müller & Schubert
(86) International application number: PCT/IN2015/000439
(87) International publication number: WO 2016/088134

(56) References cited:
- US-A- 4 328 074
- US-A- 4 340 446
- US-A- 4 340 446
- US-A- 5 035 776
- US-A- 5 035 776
- US-B2- 7 867 365
- US-B2- 7 867 365

## Description

### FIELD OF THE INVENTION

The invention relates to a process for the preparation of ethanol using mechanically compressed vapour as energy source for distillation and evaporation, wherein significantly less amount of steam energy [thermal energy] is required compared with a process not employing the process of the invention disclosed herein. The invention also relates to an apparatus for performing said process.

### BACKGROUND

Many alcoholic beverages are produced comprising one or more of the steps of: [1] producing ethanol by fermentation of a carbohydrate-rich feedstock to produce a fermented wash having concentration of about 2% to about 23% alcohol by volume [ABV]; [2] distilling the product of fermentation at elevated temperatures to produce ethanol products like rectified spirit, neutral spirit or absolute alcohol; and [3] aging the ethanol spirits until it possesses desired flavour, aroma, and colour characteristics. The commercial production of alcohol by distillation has been in widespread operation for many centuries.

The distillation is a known technique for purification of a liquid substance and involves vaporizing the substance at its boiling point, condensing the vapour and collecting the purified form as a condensate. Distillation is useful for separating a mixture when the components have different boiling points. Several kinds of distillation techniques for binary or multi-component mixtures are described and practiced in the art, for example: (1) simple, (2) vacuum or reduced pressure, (3) fractional and (4) steam distillation.

Patent US 4,328,074 discloses a process for producing concentrated alcohol and distillery slop from fermented beer with a reduced amount of energy by employing a vapor recompression distillery slop evaporator in which evaporator vapors are used to strip alcohol from the fermented liquor before they are returned as the heat source for evaporation. Vents in the evaporator permit passage of uncondensed vapors used to drive the evaporator to a rectifier, in which they constitute the principal heat and alcohol source. Condensed vapors from the evaporator and the bottom stream from the rectifier are stripped of their remaining alcohol content in a condensate stripper, which is also driven by the recompressed vapors from the evaporator.

US 4,340,446 discloses a distillation process for recovering concentrated ethanol from an aqueous fermentate comprises fractionation of components of the aqueous fermentate under reduced pressure with vapor recompression and recovery of waste heat in a manner which obviates the need for substantial external sources of heat to operate the fractionation apparatus. The process includes a preliminary enrichment of the fermentate to separate volatile components, the enrichment also including recompression of a vapor phase and utilization of waste heat. The compression means used during enrichment and fractionation are run by engines which produce the recoverable waste heat.

Patent US 5,035,776 discloses a thermally-integrated extractive distillation process for recovering anhydrous ethanol from fermentation or synthetic feedstocks, that has a distillation train of four columns. Two columns are preconcentrators operated in parallel. The remaining columns are an extractive distillation dehydrating tower, and an entrainer-recovery column. The two preconcentrators and the dehydrating tower are operated at three successively increasing pressures so that the condensing vapors of the overhead product of the dehydrating tower supply the necessary heat to the reboiler of the intermediate-pressure preconcentrator. The overhead vapors of this preconcentrator are in turn, used to supply the required heat to the reboiler of the lowest-pressure preconcentrator. The bottom product from each preconcentrator is used to preheat the dilute feed.

US 7,867,365 discloses a system for producing ethanol from an organic source and that operates to purify and dry ethanol from a beer source. The system for producing substantially anhydrous ethanol comprises: (a) a first distillation stripping column; (b) a second distillation rectifying column having a higher operating temperature than said stripping column; (c) a molecular sieve dehydration means in fluid communication with said rectifying column. Heat from the overhead of the second distillation rectifying column and the molecular sieve dehydration are used to heat the first distillation stripping column.

In all techniques available for distillation of ethanol from fermented wash, the consumption of steam energy per litre of ethanol produced is the critical measure for economics of the process. Presently, a typical ethanol production process consumes about 2 to about 3 kilogram of steam per litre of ethanol produced. Besides, more steam is required if the titre of ethanol in fermented wash is low. There is need of less consumption of steam per litre of ethanol consumed and the invention disclosed herein deals with a solution to the problem of high steam consumption to produce ethanol from fermented wash. The invention presented herein discloses a method of using compressed vapours for distillation having several advantages over conventional distillation methods. The invention disclosed herein also integrates the process of concentration of waste stream [also called vinasse or slop] from the distillation column [bottom stream] by using condensers that evaporate said waste stream, concentrating it with significant less amount of energy compared with the conventional methods.

### BRIEF DESCRIPTION

The invention herein discloses a process for preparation of ethanol using a mechanical vapour re-compression method comprising: preheating a fermented wash forming a first stream; subjecting said first stream to a stripping column forming a first top stream and a first bottom stream; condensing said first top stream through first condenser forming a high concentration ethanol stream and a first vapour stream; solids from said bottom stream of step [b] and concentrating it in said first condenser forming a concentrated stream; compressing said first vapour stream forming a high-pressure vapour stream and providing it to said stripping a product stream, a second top stream and a second bottom stream; providing said second top stream to a second condenser forming a liquid stream and returning it to said rectifying column; recycling said second bottom stream of step [f] with said fermented wash of step [a] forming said first stream; subjecting said concentrated stream of step [d] to said second condenser forming a concentrated waste stream and a second vapour stream; and compressing said second vapour stream forming said high-pressure vapour stream and providing it to said distilling column. An apparatus for performing said process is defined in claim 10.

### DESCRIPTION OF THE DRAWING

Particular examples of methods in accordance with this invention will now be described with reference to accompanying drawing, in which:

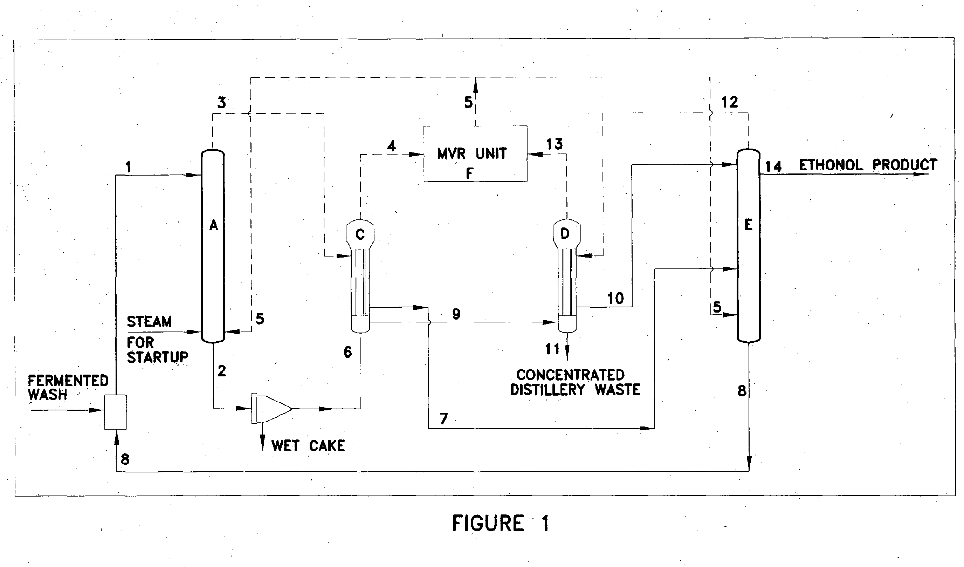

FIGURE 1 is an exemplary plan of the invention showing several features that control the process of using mechanically re-compressed water vapour for the distillation of ethanol from a fermented wash. A fermented wash after preheating [1] is fed to a stripping column [A]. A compressed vapour stream [5] fed to the stripping column at the bottom of column where temperature is maintained at about 80 °C. This compressed vapour stream is used for the effective stripping of ethanol from said fermented wash in said stripping column. A first top stream [3] coming from said stripping column is condensed in a first condenser [C] forming a high-ethanol stream [7] that is further sent to a rectifying column [E] through a storage tank [optional] for further rectification of ethanol present said stream to get final ethanol product stream [14]. A first bottom stream [2] of said stripping column [A] is first subjected to solid-liquid separator to remove solids to form stream [6], which is concentrated in said first condenser [C] and through stream [9] in a second condenser [D] to get concentrated distillery waste stream/ concentrated syrup [11]. A first vapour stream [4] coming unit [F] leading to forming of a high-pressure vapour stream [5]. Said first vapour stream [4] is free of ethanol and is readily compressed to high-pressure vapour stream in the MVR unit [F]. Said high-pressure vapour stream [5] is used to run said stripping column [A] as well as said rectifying column [E] without need of any live steam except to turn on the system. A second top stream [12] coming from said column [E] is sent to said second condenser [D] and a second vapour stream [13] coming from said second condenser [D] is subjected to mechanical vapour re-compression unit [F] leading to forming of a high-pressure vapour stream [5]. Said second vapour stream is free of ethanol and is readily compressed to high-pressure vapour stream in the MVR unit [F]. Next, a second bottom stream [8] of said rectifying column [E] is mixed with fermented wash and recycled to recover ethanol present in it.

### DETAILED DESCRIPTION

In one embodiment of the present invention, a fermented wash with ethanol concentration of between 6% to 18% by volume is obtained from yeast fermentation of a carbohydrate rich feedstock like grains, cereals, tubers, molasses, sugarcane juice or lignocellulosic materials. This wash is then preheated to about 80 °C. This preheated wash [first stream] is subjected to a stripping column to get a top ethanol rich vapour stream [first top stream]. Next, this stream is condensed and collected in a collection tank for further rectification in a rectifying column. The energy present in said first top stream is exchanged in a first condenser to the first bottom stream of said stripping column. This causes said first bottom stream to concentrate and part of it is forming a first vapour stream, which is mechanically re-compressed to generate the high-pressure vapour stream; which in turn is used for running said stripping column. Further said condensed ethanol rich stream collected in a tank is subjected to the rectification process in a rectifying column to get ethanol rich, ethanol product stream with about 90% ethanol by volume. The said rectifying column is also run on said high-pressure vapour stream generated in mechanical vapour re-compression unit that utilises low-pressure vapour streams of condensers present in the system. The second top stream of said rectifying column is condensed in a second condenser and recycled back to said rectifying column. The second condenser further concentrates first bottom stream to concentrated distillery waste/ stillage. The second vapour stream of low-pressure vapour from said second condenser is further condensed in said MVR unit to create said high-pressure vapour stream that runs the system without need of any external live steam once the system of optimally operated. Herein the said condensers are also known as evaporators as they are used to concentrate the waste streams.

In another embodiment of the disclosed invention as illustrated in FIGURE 1, this is an exemplary plan of the invention showing several features that control the process of using mechanically re-compressed water vapour for the distillation of ethanol from a fermented wash. A fermented wash after preheating [1] is fed to a stripping column [A]. A compressed vapour stream [5] fed to the stripping column at the bottom of column where temperature is maintained at about 80 °C. This compressed vapour stream is used for the effective stripping of ethanol from said fermented wash in said stripping column. A first top stream [3] coming from said stripping column is condensed in a first condenser [C] forming a high-ethanol stream [7] that is further sent to a rectifying column [E] through a storage tank [optional] for further rectification of ethanol present said stream to get final ethanol product stream [14]. A first bottom stream [2] of said stripping column [A] is first subjected to solid-liquid separator to remove solids to form stream [6], which is concentrated in said first condenser [C] and through stream [9] in a second condenser [D] to get concentrated distillery waste stream/ concentrated syrup [11]. A first vapour stream [4] coming from said condenser [C] is subjected to mechanical vapour re-compression unit [F] leading to forming of a high-pressure vapour stream [5]. Said first vapour stream [4] is free of ethanol and is readily compressed to high-pressure vapour stream in the MVR unit [F]. Said high-pressure vapour stream [5] is used to run said stripping column [A] as well as said rectifying column [E] without need of any live steam except to turn on the system. A second top stream [12] coming from said column [E] is sent to said second condenser [D] and a second vapour stream [13] coming from said second condenser [D] is subjected to mechanical vapour re-compression unit [F] leading to forming of a high-pressure vapour stream [5]. Said second vapour stream [13] is free of ethanol and is readily compressed to high-pressure vapour stream in the MVR unit [F]. Next, a second bottom stream [8] of said rectifying column [E] is mixed with fermented wash and recycled to recover ethanol present in it.

In yet another embodiment a process for producing ethanol by using recompressed vapour for distillation and rectification is disclosed, wherein steam [and hence process water] required for the whole process of preparation of ethanol is significantly less as the low-pressure steam is recovered and mechanically recompressed using a centrifugal fan or positive displacement fan. This reduced requirement of process water has several advantages like overall water requirement and consequent water treatment requirements are substantially reduced making the process economic as well as eco-friendly.

Example provided below gives wider utility of the invention without any limitations as to the variations that may be appreciated by a person skilled in the art. A non-limiting summary of various embodiments is given in the examples, which demonstrate the advantageous and novel aspects of the process disclosed herein. Particular examples of processes in accordance with this invention will now be described.

### EXAMPLE

In one embodiment of the present invention about 595-kilo litre per day of ethanol [absolute ethanol basis] plant was operated with fermented wash containing about 15% to about 18% ethanol by volume along with congeners and solids. The fermented wash required for said process capacity was about 130 to 160 tons per hour, which was available at about 32 °C from fermentation section. This feed was preheated to about 80 °C by using available/ spare heat from other sections of the plant or from the spent wash stream obtained in the process. This preheated fermented wash along with stream coming out from rectifier bottom was fed to the stripping column to strip out the ethanol. The fresh steam was fed to the stripping column initially at the time of start-up only, and once the process was stabilized fresh steam supply disconnected. The stripping column fist top stream contains most of the ethanol present in fermented wash after distillation having about 55% to about 65% ethanol by weight. This ethanol rich stream is condensed in a first condenser and further rectified in the rectifying column to obtain ethanol products of desired compositions. The energy present in the first top stream of stripping column is transferred to the first bottom stream of said stripping column in said first condenser, leading to formation of a first vapour stream and concentrated spent wash/ stillage. The first vapour stream is further re-compressed in the MVR unit to get a high-pressure vapour stream that is used to run said stripping column in an energy efficient manner. In a similar way the rectifying column is run using said high-pressure vapour stream and a second vapour stream of a second condenser is also converted to the said high-pressure vapour stream using said MVR unit as illustrated in FIGURE 1 . The mechanical vapour re-compression [MVR] unit comprises a centrifugal fan or positive displacement fan for generation of said high-pressure vapour stream from said low-pressure condenser top streams. Next, said condensed ethanol rich stream of said stripping column is further rectified in the rectifying column.

The rectifying column bottom stream that contains about 20% to 35% ethanol by volume is mixed with feedstock-fermented wash used in stripping column. Further, due to concerted actions of the two condensers present in the system, the spent wash/ stillage is concentrated to about 50% and the water required to create high-pressure steam in the system is also obtained from it. The conventional methods require about 1.5 to 1.8 kg of steam per litre of hydrous alcohol, whereas the method disclosed herein requires about no steam during the steady state operation of the system.

While the invention has been particularly shown and described with reference to embodiments listed in examples, it will be appreciated that several of the above disclosed and other features and functions, or alternatives thereof, may be desirably combined into many other different systems or applications. Also that various presently unforeseen and unanticipated alternatives, modifications, variations, or improvements therein may be subsequently made by those skilled in the art which are also intended to be encompassed by the following claims. Although the invention has been described with reference to specific preferred embodiments, it is not intended to be limited thereto, rather those having ordinary skill in the art will recognize that variations and modifications may be made therein which are within the scope of the claims.

## Claims

1. A process for preparation of ethanol using a mechanical vapour recompression method comprising:
a. preheating a fermented wash forming a first stream [1];
b. subjecting said first stream to a stripping column [A] forming a first top stream [3] and a first bottom stream [2];
c. condensing said first top stream [3] through first condenser [C] forming a high concentration ethanol stream [7] and a first vapour stream [4];
d. removing solids from said first bottom stream [2] of step [b] and concentrating it in said first condenser [C] forming a concentrated stream [9];
e. compressing said first vapour stream [4] forming a high-pressure vapour stream [5] in a mechanical vapour recompression unit [F] and providing it to said stripping column [A];
f. subjecting said high ethanol stream [7] to a rectifying column [E] forming a product stream [14], a second top stream [12] and a second bottom stream [8];
g. providing said second top stream [12] to a second condenser [D] forming a liquid stream [10] and returning it to said rectifying column [E];
h. recycling said second bottom stream [8] of step [f] with said fermented wash of step [a] forming said first stream [1];
i. subjecting said concentrated stream [9] of step [d] to said second condenser [D] forming a concentrated waste stream [11] and a second vapour stream [13]; and
j. compressing said second vapour stream [13] forming said high-pressure vapour stream [5] in said mechanical vapour recompression unit [F] and providing it to said distilling column [E].

2. The process of claim 1, wherein said fermented wash is preheated to about 80 °C.

3. The process of claim 1, wherein said stripping column [A] gives said first top stream with about 30% to about 70% ethanol by weight.

4. The process of claim 1, wherein said first condenser [C] is energized using said first top stream [3] of said stripping column [A].

5. The process of claim 1, wherein said second condenser [D] is energized using said second top stream [12] of said rectifying column [E].

6. The process of claim 1, wherein said stripping column [A] is operated using said high-pressure vapour stream [5].

7. The process of claim 1, wherein said rectifying column [E] is operated using said high-pressure vapour stream [5].

8. The process of claim 1, wherein said high-pressure vapour stream [5] is of water without any amount of ethanol in it.

9. The process of claim 1, wherein said mechanical vapour recompression unit [F] comprises a centrifugal fan or a positive displacement fan.

10. An apparatus for performing the process according to any of claims 1 to. 9,
comprising a stripping column [A], a first condenser [C], a second condenser [D], a rectifying column [E], a solid-liquid-separator, and a mechanical vapour re-compression unit [MVR-unit, F],
wherein
said stripping column [A] is provided to receive a preheated wash [1] from fermented wash, a compressed vapour stream [5] at the bottom of said stripping column, and is connected with said first condenser [C], to feed a first top stream [3] coming from said stripping column [A], to said first condenser [C];
said first condenser [C] is provided to receive and condense said first top stream [3] fed from said stripping column [A] to form a high-ethanol stream [7], and is connected with rectifying column [E] to feed said high-ethanol stream [7] to said rectifying column [E];
said rectifying column [E] is provided to receive and rectify said high-ethanol stream [7], to release final ethanol product stream [14];
said stripping column [A] is furthermore provided at the bottom to be connected with said solid-liquid-separator, to feed a first bottom stream [2] of said stripping column [A] to said solid-liquid-separator;
said solid-liquid-seperator is provided to remove solids from said first bottom stream [2] to form stream [6], and is connected with said first condenser [C], to feed stream [6] to first condenser [C];
said first condenser [C] is furthermore connected with said second condenser [D] and provided to concentrate stream [6] to form stream [9];
said second condenser [D] is provided to receive and concentrate stream [9] to get concentrated distillery waste stream/ concentrated syrup [11];
said first condenser [C] is furthermore connected with said mechanical vapour re-compression unit [F], to feed a first vapour stream [4] from said first condenser [C] to said mechanical vapour re-compression unit [F];
said vapour re-compression unit [F] is provided to compress said first vapour stream [4] to form high-pressure vapour stream [5]; and is connected with said stripping column [A] and rectifying column [E] to feed said with high-pressure vapour stream [5] to run said columns;
said rectifying column [E] is furthermore connected with said second condenser [D] to feed a second top stream [12] to said second condenser[D];
said second condenser [D] is furthermore connected with said mechanical vapour re-compression unit [F] to feed second vapour stream [13] to said mechanical vapour re-compression unit [F]; which is provided to form high-pressure vapour stream [5] from second vapour stream [13]; and
said rectifying column [E] is furthermore provided to feed a second bottom stream [8] to said fermented wash.

## Patentansprüche

1. Verfahren zur Herstellung von Ethanol unter Verwendung eines mechanischen Dampfrekompressionsverfahrens, umfassend:
a. Vorwärmen einer fermentierten Gärflüssigkeit, einen ersten Strom [1] bildend;
b. Aussetzen des genannten ersten Stroms einer Strippkolonne [A], einen ersten Kopfstrom [3] und einen ersten Bodenstrom [2] bildend;
c. Kondensieren des genannten ersten Kopfstroms [3] durch einen ersten Kondensationskühler [C], einen ethanolreichen Strom [7] und einen ersten Dampfstrom [4] bildend;
d. Entfernen von Feststoffen aus dem genannten ersten Bodenstrom [2] aus Schritt [b] und sein Konzentrieren in dem genannten ersten Kondensationskühler [C], einen konzentrierten Strom [9] bildend;
e. Komprimieren des genannten ersten Dampfstroms [4], einen Hochdruck-Dampfstrom [5] in einer mechanischen Dampfrekompressionseinheit [F] bildend, und sein Zuführen zu der genannten Strippkolonne [A];
f. Aussetzen des genannten ethanolreichen Stroms [7] einer Rektifizierkolonne [E], einen Produktstrom [14], einen zweiten Kopfstrom [12] und einen zweiten Bodenstrom [8] bildend;
g. Zuführen des genannten zweiten Kopfstroms [12] zu einem zweiten Kondensationskühler [D], einen flüssigen Strom [10] bildend, und dessen Rückführung zu der genannten Rektifizierkolonne [E];
h. Wiederverwerten des genannten zweiten Bodenstroms [8] aus Schritt [f] mit der genannten fermentierten Gärflüssigkeit aus Schritt [a], den genannten ersten Strom [1] bildend;
i. Aussetzen des genannten konzentrierten Stroms [9] aus Schritt [d] dem genannten zweiten Kondensationskühler [D], einen konzentrierten Abfallstrom [11] und einen zweiten Dampfstrom [13] bildend; und
j. Komprimieren des genannten zweiten Dampfstroms [13], den genannten Hochdruck-Dampfstrom [5] in der genannten mechanischen Dampfrekompressionseinheit [F] bildend, und sein Zuführen zur genannten Destillationskolonne [E].

2. Verfahren nach Anspruch 1, worin die genannte fermentierte Gärflüssigkeit auf ungefähr 80 °C vorgewärmt wird.

3. Verfahren nach Anspruch 1, worin die genannte Strippkolonne [A] den genannten ersten Kopfstrom mit ungefähr 30 Gewichts-% bis ungefähr 70 Gewichts-% Ethanol abgibt.

4. Verfahren nach Anspruch 1, worin dem genannten ersten Kondensationskühler [C] Energie unter Verwendung des genannten ersten Kopfstroms [3] der genannten Strippkolonne [A] zugeführt wird.

5. Verfahren nach Anspruch 1, worin der genannte zweite Kondensationskühler [D] unter Verwendung des genannten zweiten Kopfstroms [12] der genannten Rektifizierkolonne [E] mit Energie versorgt wird.

6. Verfahren nach Anspruch 1, worin die genannte Strippkolonne [A] unter Verwendung des genannten Hochdruck-Dampfstroms [5] betrieben wird.

7. Verfahren nach Anspruch 1, worin die genannte Rektifizierkolonne [E] unter Verwendung des genannten Hochdruck-Dampfstroms [5] betrieben wird.

8. Verfahren nach Anspruch 1, worin der genannte Hochdruck-Dampfstrom [5] aus Wasser ohne jegliche Menge Ethanol besteht.

9. Verfahren nach Anspruch 1, worin die genannte mechanische Dampfrekompressionseinheit [F] einen Radialventilator oder einen Verdrängerlüfter umfasst.

10. Vorrichtung zur Durchführung des Verfahrens gemäß irgendeinem der Ansprüche 1 bis 9,
umfassend eine Strippkolonne [A], einen ersten Kondensationskühler [C], einen zweiten Kondensationskühler [D], eine Rektifizierkolonne [E], einen Fest-Flüssig-Separator und eine mechanische Dampfrekompressionseinheit [MVR-Einheit, F], worin
die genannte Strippkolonne [A] ausgestattet ist, um eine vorgewärmte Gärflüssigkeit [1] aus fermentierter Gärflüssigkeit, einen komprimierten Dampfstrom [5] am Boden der genannten Strippkolonne aufzunehmen, und verbunden ist mit dem genannten ersten Kondensationskühler [C], um einen ersten Kopfstrom [3], der von der genannten Strippkolonne [A] kommt, in den genannten ersten Kondensationskühler [C] einzuspeisen;
der genannte erste Kondensationskühler [C] ausgestattet ist, um den genannten ersten Kopfstrom [3], der von der genannten Strippkolonne [A] eingespeist wird, aufzunehmen und zu kondensieren, um einen ethanolreichen Strom [7] zu bilden, und verbunden ist mit der Rektifizierkolonne [E], um den genannten ethanolreichen Strom [7] in die genannte Rektifizierkolonne [E] einzuspeisen;
die genannte Rektifizierkolonne [E] ausgestattet ist, um den genannten ethanolreichen Strom [7] aufzunehmen und zu rektifizieren, um den finalen Ethanol-Produktstrom [14] abzutrennen;
die genannte Strippkolonne [A] weiterhin am Boden ausgestattet ist, um mit dem genannten Fest-Flüssig-Separator verbunden zu werden, um einen ersten Bodenstrom [2] der genannten Strippkolonne [A] in den genannten Fest-Flüssig-Separator einzuspeisen;
der genannte Fest-Flüssig-Separator ausgestattet ist, um Feststoffe aus dem genannten ersten Bodenstrom [2] zu entfernen, um einen Strom [6] zu bilden, und verbunden ist mit dem genannten ersten Kondensationskühler [C], um den Strom [6] in den ersten Kondensationskühler [C] einzuspeisen;
der genannte erste Kondensationskühler [C] weiterhin verbunden ist mit dem genannten zweiten Kondensationskühler [D] und ausgestattet ist, um Strom [6] zu konzentrieren, um Strom [9] zu bilden;
der genannte zweite Kondensationskühler [D] ausgestattet ist, um Strom [9] aufzunehmen und zu konzentrieren, um konzentrierten Destillationsabfallstrom / konzentrierten Sirup [11] zu erhalten;
der genannte erste Kondensationskühler [C] weiterhin verbunden ist mit der genannten mechanischen Dampfrekompressionseinheit [F], um einen ersten Dampfstrom [4] von dem ersten Kondensationskühler [C] in die genannte mechanischen Dampfrekompressionseinheit [F] einzuspeisen;
die genannte mechanische Dampfrekompressionseinheit [F] ausgestattet ist, um den genannten ersten Dampfstrom [4] zu komprimieren, um einen Hochdruck-Dampfstrom [5] zu bilden; und verbunden ist mit der genannten Strippkolonne [A] und Rektifizierkolonne [E], um diese mit Hochdruck-Dampfstrom [5] zu beschicken, um diese Kolonnen zu betreiben;
die genannte Rektifizierkolonne [E] weiterhin verbunden ist mit dem genannten zweiten Kondensationskühler [D], um einen zweiten Kopfstrom [12] in den genannten zweiten Kondensationskühler [D] einzuspeisen;
der genannte zweite Kondensationskühler [D] weiterhin verbunden ist mit der genannten mechanischen Dampfrekompressionseinheit [F], um den zweiten Dampfstrom [13] in die genannte mechanische Dampfrekompressionseinheit [F] einzuspeisen; welche ausgestattet ist, um den Hochdruck-Dampfstrom [5] aus dem zweiten Dampfstrom [13] zu bilden; und
die genannte Rektifizierkolonne [E] weiterhin ausgestattet ist, um einen zweiten Bodenstrom [8] in die genannte fermentierte Gärflüssigkeit einzuspeisen.

## Revendications

1. Procédé de préparation d'éthanol utilisant un procédé de recompression de vapeur mécanique comprenant:
a. préchauffer un lavage fermenté formant un premier courant [1];
b. soumettre ledit premier courant à une colonne de décapage [A] formant un premier courant de sommet [3] et un premier courant de fond [2];
c. condenser ledit premier courant de sommet [3] à travers un premier condenseur [C] formant un courant d'éthanol à haute concentration [7] et un premier courant de vapeur [4];
d. enlever les solides dudit premier courant de fond [2] de l'étape [b] et le concentrer dans ledit premier condenseur [C] formant un courant concentré [9];
e. comprimer ledit premier courant de vapeur [4] formant un courant de vapeur à haute pression [5] dans une unité de re-compression de vapeur mécanique [F] et le fournir à ladite colonne de décapage [A];
f. soumettre ledit courant d'éthanol élevé [7] à une colonne de rectification [E] formant un courant de produit [14], un second courant de sommet [12] et un second courant de fond [8];
g. fournir ledit second courant de sommet [12] à un second condenseur [D] formant un courant de liquide [10] et le retournant à ladite colonne de rectification [E];
h. recycler ledit second courant de fond [8] de l'étape [f] avec ledit lavage fermenté de l'étape [a] formant ledit premier courant [1];
i. soumettre ledit courant concentré [9] de l'étape [d] audit second condenseur [D] formant un courant de déchets concentré [11] et un second courant de vapeur [13]; et
j. comprimer ledit second courant de vapeur [13] formant ledit courant de vapeur à haute pression [5] dans ladite unité de recompression de vapeur mécanique [F] et le fournir à ladite colonne de distillation [E].

2. Procédé selon la revendication 1, dans lequel ledit lavage fermenté est préchauffé à environ 80 °C.

3. Procédé selon la revendication 1, dans lequel ladite colonne de décapage [A] donne ledit premier courant de sommet avec environ 30 % à environ 70 % en poids d'éthanol.

4. Procédé selon la revendication 1, dans lequel ledit premier condenseur [C] est énergisé en utilisant ledit premier courant de sommet [3] de ladite colonne de décapage [A].

5. Procédé selon la revendication 1, dans lequel ledit second condenseur [D] est énergisé en utilisant ledit second courant de sommet [12] de ladite colonne de rectification [E].

6. Procédé selon la revendication 1, dans lequel ladite colonne de décapage [A] fonctionne en utilisant ledit courant de vapeur à haute pression [5].

7. Procédé selon la revendication 1, dans lequel ladite colonne de rectification [E] fonctionne en utilisant ledit courant de vapeur à haute pression [5].

8. Procédé selon la revendication 1, dans lequel ledit courant de vapeur à haute pression [5] est de l'eau sans aucune quantité d'éthanol à l'intérieur de celui-ci.

9. Procédé selon la revendication 1, dans lequel ladite unité de recompression de vapeur mécanique comprend un ventilateur centrifuge ou un ventilateur à déplacement positif.

10. Appareil pour effectuer le procédé selon l'une quelconque des revendications 1 à 9,
comprenant une colonne de décapage [A], un premier condenseur [C], un second condenseur [D], une colonne de rectification [E], un séparateur de solide-liquide et une unité de re-compression de vapeur mécanique [unité-MVR, F], où
ladite colonne de décapage [A] est fournie pour recevoir un lavage préchauffé [1] du lavage fermenté, un courant de vapeur comprimé [5] au fond de ladite colonne de décapage, et est connectée avec ledit premier condenseur [C], pour alimenter un premier courant de sommet [3] provenant de ladite colonne de décapage [A], audit premier condenseur [C];
ledit premier condenseur [C] est fourni pour recevoir et condenser ledit premier courant de sommet [3] alimenté à partir de ladite colonne de décapage [A] pour former un courant d'éthanol élevé [7], et est connecté avec la colonne de rectification [E] pour alimenter ledit courant d'éthanol élevé [7] à ladite colonne de rectification [E];
ladite colonne de rectification [E] est fournie pour recevoir et rectifier ledit courant d'éthanol élevé [7], pour libérer le courant de produit d'éthanol final [14];
ladite colonne de décapage [A] est en outre fournie au fond pour être connectée avec ledit séparateur de solide-liquide, pour alimenter un premier courant de fond [2] de ladite colonne de décapage [A] audit séparateur de solide-liquide;
ledit séparateur de solide-liquide est fourni pour enlever les solides dudit premier courant de fond [2] pour former un courant [6], et est connecté avec ledit premier condenseur [C], pour alimenter le courant [6] au premier condenseur [C];
ledit premier condenseur [C] est en outre connecté avec le second condenseur [D] et fourni pour concentrer le courant [6] pour former le courant [9];
ledit second condenseur [D] est fourni pour recevoir et concentrer le courant [9] pour avoir le courant de déchets de distillerie concentré/sirop concentré [11];
ledit premier condenseur [C] est en outre connecté avec ladite unité de re-compression de vapeur mécanique [F], pour alimenter un premier courant de vapeur [4] dudit premier condenseur [C] à ladite unité de recompression de vapeur mécanique [F];
ladite unité de re-compression de vapeur [F] est fournie pour comprimer ledit premier courant de vapeur [4] pour former un courant de vapeur à haute pression [5]; et est connectée avec ladite colonne de décapage [A] et la colonne de rectification [E] pour alimenter ledit courant de vapeur à haute pression [5] pour le fonctionnement desdites colonnes;
ladite colonne de rectification [E] est en outre connectée avec ledit second condenseur [D] pour alimenter un second courant de sommet [12] audit second condenseur [D];
ledit second condenseur [D] est en outre connecté avec ladite unité de re-compression de vapeur mécanique [F] pour alimenter le second courant de vapeur [13] à ladite unité de re-compression de vapeur mécanique [F]; qui est fourni pour former un courant de vapeur à haute pression [5] à partir du second courant de vapeur [13]; et
ladite colonne de rectification [E] est en outre fournie pour alimenter un second courant de fond [8] audit lavage fermenté.
